# EUROPEAN PATENT SPECIFICATION

(11) **EP 4 052 556 B1**
(45) Date of publication and mention of the grant of the patent: **18.02.2026**
(21) Application number: 21160198.4
(22) Date of filing: 02.03.2021
(51) Int. Cl.: A01D 17/00, B03B 11/00, B65G 17/06, B03B 5/40, B03B 5/28, B07B 1/10, A01D 61/04, B65G 19/10, B65G 19/24, B65G 49/04

(54) **OPEN ENDLESS BELT**
OFFENES ENDLOSBAND
CEINTURE OUVERTE SANS FIN

(43) Date of publication of application: 07.09.2022
(73) Proprietor: Deprez Construct NV, 8610 Kortemark (BE)
(72) Inventor: Deprez, Johan, 8680 Koekelare (BE)
(74) Representative: Ipsilon Belgium

(56) References cited:
- DE-C1- 19 511 931
- GB-A- 2 354 503
- US-A- 2 698 087

## Description

### Field of the Invention

The present invention generally relates to the field of agricultural machinery and separation machinery, more particular to separation machinery for e.g. separating crops like root crops, and to endless belts used in such machines.

### Background of the Invention

When crops, like root crops (carrots, potatoes, beets, turnips, ...) are harvested, not only the crops and ground is picked up by the machinery used, but also foreign particles like plastic materials, bars of all kind of material, branches, leaves, etc, are present in the product stream.

Various separating machinery are used to separate the foreign products from the crops. One is known from DE 195 11 931 C1. This machine includes an open endless belt comprising lateral chains and a plurality of transversal bars, a loading station, a separation station, and a discharge station, wherein said loading station comprises a loading screen frame for receiving the products to be separated, the bars of the open endless belt contacting said loading screen frame. Separating machinery separating products by the difference in specific weight of the products or by the dimensions of the products are used. An example of an agricultural separating machine separating products by the difference in specific weight of the products is given in US4750995. In such machines, the liquid phase may get contaminated at the walls of the machine due to sedimentation of particles from the liquid. In separating machinery separating products by the dimensions of the products are used, functional surfaces of the machine, like the loading surface on which the products to be separated are provided to the machine, get contaminated with ground and mud sticking to the functional surface.

Hence such machines often get dirty and ground, mud and alike gets to contaminate the surfaces with which the products come in contact with.

### Summary of the Invention

It is the object of the invention to provide means to reduce or even avoid to a large extend contamination of functional surfaces of separating machinery, also referred to as separator machines, in particular in the agricultural field.

According to the present invention a separating machine for separating products by dimension of said products including an open endless belt is defined in claim 1.

This open endless belt is of particularly advantageous use in agricultural machinery, such as agricultural separating machines and/or in the use in the recycling industry.

The open endless belt has a longitudinal and transversal direction and defining an inner and an outer side to the open endless belt. The open endless belt comprises:
- a first and second lateral chain at the transversal outer ends of the open endless belt;
- a plurality of transversal bars having a first and a second outer end, the first outer end being connected to the first longitudinal chain, the second outer end being connected to the second longitudinal chain;
wherein the lower surfaces of the bars are flush with or extend beyond the first and second lateral chain at the inner side of the open endless belt.

The bars extending beyond the first and second lateral chain at the inner side of the open endless belt will cause the bars extending beyond the first and second lateral chain in a direction from the outer to the inner side of the open endless belt along the inner side of the open endless belt.

The lower surfaces of the bars being flush with or extending beyond the first and second lateral chain at the inner side of the open endless belt have the advantage that in use, in particular in agricultural machinery, such as agricultural separating machines, these lower surfaces may contact surfaces of a machine in which the open endless belt is used. When operating the open endless belt, the lower surfaces of the bars may slide over moving or fixed surfaces and as such may scrape these surfaces, thereby removing material left on said surfaces. In particularly in agricultural machines, often dirt (like ground or mud and alike) builds up on functional surfaces of such machines. It may be important to reduce or even avoid such dirt build-up on these functional surfaces. Thereby interruptions of the machine in its entirety due to the accumulation of too much dirt on the functional surface are avoided.

According to some embodiments, the lower surfaces of the bars may extend beyond the first and second lateral chain at the inner side of the open endless belt.

As an example, the lower surfaces of the bars extend beyond the first and second lateral chain at the inner side of the open endless belt over a distance e.g. in a range of 0 to 30 mm.

The bars extending beyond the first and second lateral chain at the inner side of the open endless belt, increase the scraping effect of the open endless belt in use.

According to some embodiments, the chains may comprise chain link plates, each of said transversal bars being connected to one of the chain link plates.

The bars may be provided from metal or metallic material, such as steel or stainless steel, or polymers, like polypropylene, polyethylene or polyester. The bars may have, in radial direction, a circular or polygonal cross section, such as triangular, square, rectangular or hexagonal. The width of the cross section of the bars, i.e. the largest length between two points of the circumference of the cross section of the bar, is in the range of 10 to 150mm .

Preferably one side of the polygonal cross section is parallel, even possibly coplanar, with the inner side of the open endless belt.

The bars being connected to the chain plates have the advantage that the orientation of the bars in view of the longitudinal chains remains always identical, independent the path, such as curves and alike, the chains may follow.

According to some embodiments, the bars may be rods provided at their lower side with a protrusion, said protrusion extending beyond the first and second lateral chain at the inner side of the open endless belt.

The lower side of the rod is the side oriented to the inner side of the open endless belt.

The protrusion may be a ridge, a rib, a fin or alike, the outer part of it extending beyond the first and second lateral chain at the inner side of the open endless belt. The protrusion may be made out of identical material as the rod, but is preferably made from rubber or rubberlike material. Alternatively, the bars may, along part of the whole of their outer surface, be provided with a rubber coating. This may avoid damage to the products the bars contact during use. Optionally the lower side of the bars may be free of coating, or may be coated with another coating, e.g. a wear resistant material.

The rods may be provided from metal or metallic material, such as steel or stainless steel, or polymers, like polypropylene, polyethylene or polyester. The rods may have, in radial direction, a circular or polygonal cross section, such as triangular, square, rectangular or hexagonal. Preferably one side of the polygonal cross section is parallel, even possibly coplanar, with inner side of the open endless belt.

This protrusion may be the first protrusion if the bars are rods provided with a protrusion at their lower side, and with a further, second protrusion at their upper side.

This protrusion extends beyond the first and second lateral chain at the inner side of the open endless belt, i.e. in a direction from outer to inner side of the open endless belt, over a distance of 0 to 30 mm.

The advantage of these protrusions is that the protrusions can function even better as a scraper when the inner side of the open endless belt contacts a surface where unwanted material may accumulate.

According to some embodiments, the bars may be rods provided at their upper side with a protrusion, said protrusion extending beyond the first and second lateral chain at the inner side of the open endless belt.

This protrusion extends beyond the first and second lateral chain in a direction from inner to outer side of the open endless belt.

The upper side of the rod is the side oriented to the outer side of the open endless belt.

The protrusion may be a ridge, a rib, a fin, the outer part of this extending beyond the first and second lateral chain at the inner side of the open endless belt. The protrusion may function as a paddle. The protrusion may be made from identical material as the rod but may be made from rubber or rubberlike material, steel, stainless steel or polymer.

This protrusion has as an advantage that products being provided on the outer side of the open endless belt, can be taken along with the belt more easily. In liquid circumstances, the protrusion can be used as paddle to scoop up products from or within the liquid.

According to some embodiments, the open endless belt further may comprise at least one elongate flexible element positioned between the longitudinal chains and parallel to the longitudinal direction.

Preferably the at least one bar may be mechanically connected to the at least one elongate flexible element.

The elongate flexible element may be a wire, a strand, a cord, a rope, a filament or alike. The elongate flexible element may be made from polymeric or metal material, such as steel or stainless steel, or combinations thereof. The elongate flexible elements preferably are steel cables, steel cords or steel ropes.

Bars may be mechanically connected to the at least one elongate flexible element by means of clamps, such as cable clamps or alike.

The elongate flexible element will reduce to some extent possible hearing of the belt during use.

According to some embodiments, the open endless belt comprises a plurality of elongate flexible element positioned between the longitudinal chains and parallel to the longitudinal direction, each one of the one elongate flexible elements being mechanically connected to at least one of the bars.

The elongate flexible elements may be coupled to every second or third bar. Every bar may be coupled to at least one elongate flexible element. The advantage of this coupling is the fact that the open endless belt's mesh size will not vary significantly when the open endless belt is loaded with products on its outer surface. Due to the fact that not necessarily all bars are mechanically connected to all elongate flexible elements, a bit of flexibility in the transversal direction is given to the elongate flexible elements. This increases the lifetime of the elongate flexible elements when the open endless belt is in use.

According to some embodiments, the distance between adjacent elongate flexible elements, centre to centre, may be in the range of 50 to 250 mm.

Preferably the elongate flexible elements are parallel one to the other.

The distance between adjacent elongate flexible elements, centre to centre, defines the width of the mesh size of the open endless belt in transversal direction.

According to some embodiments, the distance between adjacent bars, centre to centre, may be in the range of 100 to 300 mm.

The distance between adjacent bars, centre to centre, defines the length of the mesh size of the open endless belt in longitudinal direction.

Various types of chains may be used to drive the open endless belt. The chains may be single strand roller chains, or double strand, triple strand or higher number strand roller chains. The chains may be single or double pitch roller chains. Preferably the chains are made from metal such as steel or stainless steel. The chains may be driven by corresponding sprockets, adapted to drive the chains and hence the open endless belt.

The endless open belt itself may have a width in the range of 500 to 2500mm..

The open endless belt may be used in separation machinery, preferably agricultural separating machines.

The lower surfaces of the bars being flush with or extending beyond the first and second lateral chain at the inner side of the open endless belt have the advantage that in use, these lower surfaces may contact surfaces of agricultural machine in which the open endless belt is used, e.g. in sorting machines, in separation machines, and alike. Preferably the open endless belt of the first aspect of the invention is used in agricultural machines where crops are handled to which still ground and dirt are present.

When operating the open endless belt, the lower surfaces of the bars may slide over moving or fixed surfaces and as such may scrape these surfaces, thereby removing dirt or ground, or even mud, on said surfaces. In particularly in agricultural machines, often dirt (like ground or mud and alike) builds up on functional surfaces of such machines. It may be important to reduce or even avoid such dirt build-up on these functional surfaces. Thereby interruptions of the machine in its entirety due to the accumulation of too much dirt on the functional surface are avoided.

The separating machine for separating products by dimension of said products may be an agricultural separating machine for separating agricultural products from foreign products by dimension of said products. The agricultural products may be root crops, like potatoes, carrots, onions, beets and/or turnips and alike. The separating machine for separating products by dimension of said products may be a separating machine for separating products on dimension in recycling processes. Small parts, which can be recycled as such may be separated from large, tall and/or slender parts which still needs to be reduced in size. The machine may be used as separator in recycling processes for recycling metal parts from mixtures, polymeric parts from mixtures, stone and/or concrete waste.

Next to the loading station, a separation machine comprises a separation station. The separation station may comprise a separation zone where the open endless belt may be unsupported and passes over an open area, some of the products to be separated passing through the openings of the open endless belt.

Next to the separation station, a separation machine comprises a discharge station. The discharge station may comprise a discharge means to remove the remaining products to be separated from the open endless belt.

The moving closed endless belt and the open endless belt may be moving at a different speed in longitudinal direction. The closed belt may move faster or slower as compared to the open endless belt in longitudinal direction. Due to the difference in moving speed, the bars of the open endless belt scrape the surface of the fixed plate or of the moving closed endless belt. Hence the lower sides of bars of the open endless belt scrape the loading surface and keeps it free of clogged material, e.g. mud and sand if the machine is used to separate freshly harvested crops (like potatoes) from dirt and large foreign particles. In other uses, the loading surface is kept free from thin materials slipping under the lower side of the open endless belt between loading surface and the open endless belt causing disturbances and wear to the open endless belt.

The open endless belt may contact the loading surface over a length in the range of 500 to 2000 mm.

The provision of a moving or non-moving, hence fixed, loading surface has a further advantage that long slender foreign particles which may be present in the products to be separated on dimension, will be forced to lay flat on the outer surface of the open endless belt. When long and slender objects fall on the combination of the loading surface over which the open endless belt is moving, the long slender object will hit the loading surface but is prevented to fall through the open endless belt. The long slender object will flip over and lay on the outer surface of the open endless belt, through which it can no longer penetrate. Its length cause the long but slender object not to fit in an opening of the open endless belt, hence it stays on the open endless belt in the next station, being the separation station.

The separation station is the space where belt moves over open area. The open areas of the belt are unblocked and not covered anymore at the inner side of the belt. Products small enough to pass through the openings of the open endless belt, will fall through the open endless belt.

Products fallen through the open endless belt are picked up by an exit means, such as a transport means, like a transport belt, removing the separated products away from under the open area of the separation station. Alternative, the products fallen through the open endless belt fall into a container located under the open area of the separation station.

The discharge station may comprise the turning point of open endless belt. Products retained (i.e. products which are too big or loo long to pass the mesh sizes of the open endless belt) fall off the open endless belt at its turning point. These product are picked up by a transport means, like transport belt, removing discharged products away from discharge station or fall into a container located behind the discharge station.

The chains of the open endless belt may be turned over sprockets, preferably coaxial sprockets. These sprockets may be powered end driven by any suitable engine, thereby moving the open endless belt through the separation machine.

The product to be separated may be foreign material from freshly harvested root-crops. The foreign material to be separated from the potatoes may be large stones and blocks of ground, as well as bars, sticks, tubes, etc. These long objects may pass through the openings in the belt if they are positioned with axis substantially/sufficiently perpendicular to the upper and lower plane of belt. The presence of the loading surface under the open endless belt prevents these long and slender objects to pass though the open endless belt and hence they end up discharged at the discharge station.

At the interface between the separation station and the discharge station, a guiding plate or roller may be installed under the open endless belt at the entrance of the discharge station or zone. This guiding plate, which is preferably slightly curves and gradually coming closer to the inner side of the open endless belt, or this roller, pushes objects which partially stick through the meshes of the open endless belt upwards. As such these objects, which are too large to fall though the open endless belt, but which are small enough to partially stick through the meshes, are pushed upwards and end up on the outer surface of the open endless belt. As such they are prevented to hit the machine elements which may be present in the discharge station under the open endless belt (like driving gears and rotation axes and alike). As such damage to machine elements is reduced.

The open endless belt, after passing the discharge station, turns back, preferably under the exit means of the separation station and under the loading station, towards the front end of the machine, where it is turned again and is guided towards the upper side of the loading station.

The separating machine is used for separating foreign parts from freshly harvested root crops, such as potatoes, carrots, onions, turnips or beets. The separating machine may also be used for separating larger and smaller parts in a stream of recycled products.

According to an aspect a separating machine for separating products by the difference in specific weight of the products is provided. The separating machine comprises an open endless belt according to the above embodiments.

According to some embodiments, the machine may comprise a liquid container for receiving and separating products on difference of specific weight, the container having a first flat surface extending between the bottom and a first rim of the container. The inner side of the open endless belt contacting this first flat surface along at least part of the first flat surface while moving from said bottom to said first rim.

The separating machine for separating products by the difference in specific weight of the products may be an agricultural separating machine for separating agricultural products from foreign products by the difference in specific weight of the products. The agricultural products may be root crops, like potatoes, carrots, onions, beets and/or turnips and alike.

The container of the separating machine is adapted to receive a separation liquid, which may be an aqueous liquid, such as water or a suspension of e.g. starch in water. Products to be separated into different streams of goods are provided, e.g. poured, into the liquid-filled container. Objects forming part of products to be separated will either sink to the bottom of the container or float on the liquid surface. This is dependent on the density of the liquid in the container and the specific weight of the objects.

The separating machine comprises a first extraction unit to remove all floating objects from the liquid surface. The first extraction unit may comprise a first endless belt provided with paddles or scoops, scooping up the floating objects. This first endless belt may be an open endless belt, allowing the water scooped along with the floating objects, to run back to the liquid in the container.

Alternatively, the first extraction unit may comprise an overflow where liquid together with the floating objects are flowing out of the container. The first extraction unit is preferably positioned at one side of the container. The extracted object, separated form the products to be separated, are further removed by means of e.g. a first transport means, like a transport belt, or are provided into a first container for removal.

The separating machine comprises a second extraction unit to remove all sunken objects from the bottom of the container. The second extraction unit may comprise a second endless belt provided with paddles or scoops, scooping up the sunken objects from the bottom, and move them to the surface of the liquid. There the extracted objects are further removed by means of e.g. a second transport means, like a transport belt, or are provided into a second container for removal.

This second endless belt may be an open endless belt, preferably being an open endless belt according to above embodiments. An open endless belt has the advantage that the liquid is not scooped up along with the sunken objects when the open endless belt leaves the liquid. Hence less liquid is to be handled after the sunken objects are extracted from the container, since only little liquid is dragged along at the surfaces of the objects extracted.

This second endless belt may be provided in the container such the open endless belts inner side contacts the surfaces of the container. As an example, the second endless belt follows a path along a first flat surface from the bottom of the container upwards to a first rim of the container, a path under or over the container from the first to the second rim of the container, from the second rim downwards to the bottom of the container further along a second flat surface of the container and along the bottom of the container.

The inner side of the second endless belt, being an open endless belt according to the first aspect of the invention, contacts at least the first flat surface of the container along at least part of the flat surface while moving from bottom to the first rim. Because the bars of this open endless belt are flush with or extend beyond the first and second lateral chain at the inner side of the open endless belt, the bars contacting the flat surface will scrape to the flat surface while moving from bottom to the first rim. Possible dirt and sediment, which may occur in the liquid, is scraped from the surface- and dragged along with the bars of the open endless belt. As such this flat surface is cleaned and sediment and dirt is moved upwards out of the liquid by this open endless belt. Preferably the dragged dirt and sediment is provided in a gutter or on a transport belt near or at the first rim of the container. The sunken objects may at that moment still be on the outer surface of the open endless belt, and can be provided to the second transport means, like transport belt, or into a second container for removal at the turning point of the open endless belt. Preferably the inner surface of the open endless belt also contacts the second flat surface and/or the bottom of the container.

Preferably the open endless belt used in a separating machine for separating products by the difference in specific weight of the products, has bars with at their lower side a ridge, a rib, a fin, or alike. Preferably the open endless belt used in a separating machine for separating products by the difference in specific weight of the products, has bars with at their upper side a paddle or a fin. This paddle or fin is used to take the sunken objects along with the open endless belt.

There is a discharge point from the open endless belt at the first rim of the first flat surface. This discharge point is the turning point of the open endless belt. The open endless belt preferably turs further downwards after the discharge point.

The product to be separated may be foreign material from root-crops, optionally freshly harvested or alternatively already washed root-crops. The foreign material may be plastics, leaves, etc. Ground or dirt present on the skin of the root-crops may be transferred to the liquid, and as such sediment may form at bottom of container. The inner side of the open endless belt may scrape the sediment from the bottom and surfaces of the container, temporarily locate the sediment in the openings of the endless open belt, and drag the sediment towards the first rim where it can be extracted from the container, e.g. using a gutter. The crops will be scooped and taken by the endless open belt upwards beyond the first rim. The openings in the endless open belt may be small enough to prevent the root-crops to pass the openings.

The container, preferably along the surface opposite to first flat surface via which the sunken objects are extracted, may comprise air or liquid blowers under the liquid level. This to circulate liquid and to assist floating products to be driven to the liquid surface or even to the side where the first extraction unit is present.

The container may have a funnel shape. Preferably the first flat surface is less steep as compared to the second flat surface.

The separating machine is used for separating foreign materials from harvested root crops, such as potatoes, carrots, onions, beets, turnips and alike.

### Brief Description of the Drawings

Fig. 1 illustrates schematically an open endless belt according to the invention.
Fig. 2 illustrates schematically some details of this open endless belt of figure 1.
Fig. 3 illustrates schematically a separating machine separating products by dimension of the products.
Fig. 4 illustrates schematically an agricultural separating machine separating products by the difference in specific weight.

### Detailed Description of Embodiment(s)

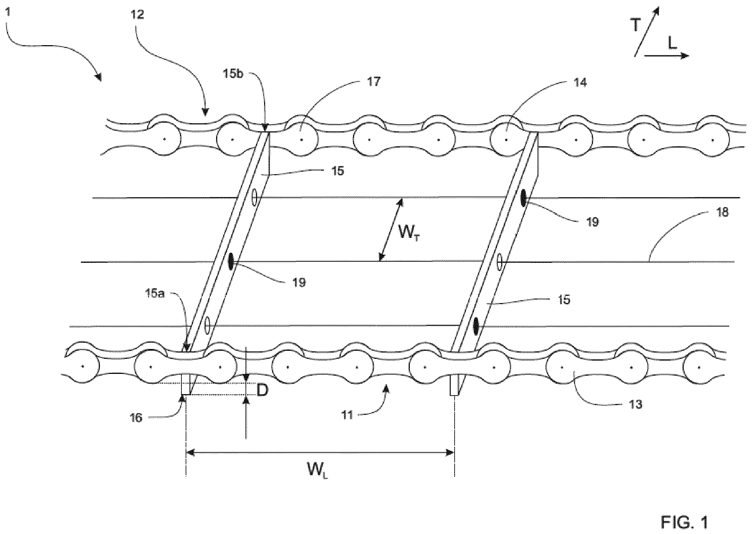

An open endless belt 1 according to the first aspect of the invention is shown in figure 1. The open endless belt 1 has a longitudinal (L) and transversal (T) direction and defines an inner side 11 and an outer side 12 to the endless belt 1. The open endless belt 1 comprises a first and second lateral chain (13, 14) at the transversal outer ends of the belt 1. A plurality of transversal bars 15 are provided, each having a first and a second outer end (15a and 15b). The first outer end 15a is connected to the first longitudinal chain 13, the second outer end 15b being connected to the second longitudinal chain 14. The outer ends (15a, 15b) are connected to the chain link plates 17. This linkage may be done by any appropriate method such as gluing or welding. In the alternative strews or bolts and nuts may be used. The lower surfaces 16 of the bars 15 are flush with or extend beyond the first and second lateral chain (13, 14) at the inner side 11 of the open endless belt.

The chains 13 and 14 used are identical chains, being single strand double pitch roller chains.

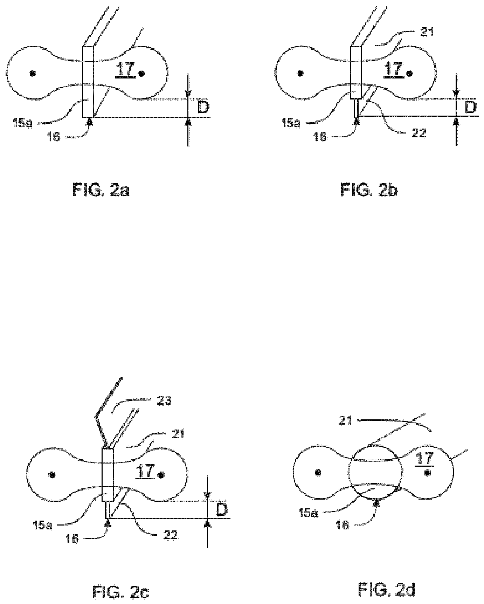

Some possible bars 15 linked to a chain link plate, are shown in figures 2a to 2c. In figure 2a, the bar 15 is a single bar or rod with a rectangular cross section. One of the sides of the rectangular cross section provides the lower surface 16 of the bar 15. In figure 2b, the bar 15 is a rod 21 with a rectangular cross section, at the lower side of the rod, a fin 22. The lower side sides of the fin 22 provides the lower surface 16 of the bar 15. In figure 2c, the bar 15 is a rod 21 with a rectangular cross section, at the lower side of the rod, a fin 22 and at the upper side a paddle 23. The lower side sides of the fin 22 provides the lower surface 16 of the bar 15. In figure 2d, a further alternative bar 15 is shown, being a single rod with a circular cross section, providing the lower surface 16 of the bar 15. The lower surface 16 of the bar 15 is flush with the chains 13 and 14, i.e. D=0.

The fin 22 may be provided from rubber. The paddle 23 may be provided from polymer, such as polypropylene.

The rods are made from steel, being rubber coated except at their lower surface 16. The length of the bar may be in the range 500 to 2500 mm.

The centre to centre distance WL between two adjacent bars 15 may be in the range of 100 to 300 mm.

As shown in figure 1, the distance D the lower side 16 of the bars 15 extend under the chains 13 and 14, may be in the range of 0 to 30mm.

In longitudinal direction, between the two chains 13 and 14, a plurality of elongate flexible elements, here ropes 18 are provided, which ropes are made from steel cords. The ropes may be coupled to the bars 15 by means of a coupling means 19 being e.g. cord clamps The centre to centre distance WT between two adjacent ropes 18 may be in the range of 50 to ,250 mm.

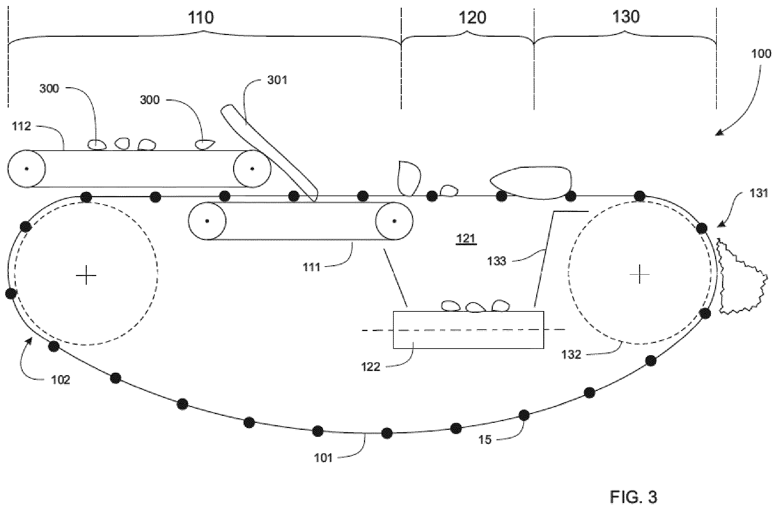

A separating machine 100 for separating products by dimension of the products in which an endless open belt 1 according to the first aspect of the invention is used, is shown in figure 3. The separating machine comprises an open endless belt 101, the separating machine 100 comprises a loading station 110, a separation station 120, and a discharge station 130, in this order along the moving direction of the open endless belt 101.

The loading station 110 comprises a loading surface 111 for receiving the products to be separated from a transport belt 112 or in the alternative, a hopper. The loading surface 111 is a closed endless belt rotating in the same direction of the open endless belt 101, but at a slower speed. The open endless belt 101 passes over the loading surface 111 and is adapted to receive the products 300 and 301 to be separated. The bars of the open endless belt 101 are contacting the loading surface 111. The open endless belt preferably is the belt of which details are given in figure 2a, 2b or 2d. because the difference in speed of the open endless belt 101 and the closed endless belt of the loading surface 111, long and slender products 301 falling on the loading surface may flip over but, in any way, and up laying flat on the upper side of the open endless belt 101.

Next to the loading station 110, a separation machine 100 comprises a separation station 120. The separation station 120 may comprise a separation zone where the open endless belt 101 may be unsupported and passes over an open area 121. The product s being smaller than the mesh size of the open endless belt 101 will be separated from the large products by passing through the openings of the open endless belt 101. Under the open area 121, a transport belt 122 may evacuate or remove the sorted products from the separation station.

Next to the separation station 120, a discharge station 130 is provided. The discharge station may comprise a discharge means to remove the remaining products to be separated from the open endless belt 101. This discharge means may be simply the turning point 131 of the open endless belt 101, where the chains are gripped by sprocket wheels 132 to turn downwards and back to the front end 102 of the machine 100. The products which were still on the open endless belt, i.e. the products being too large to pass the mesh size and including the long and slender products 301, will fall from the endless open belt and can be collected by a container or on a transport belt (not shown) to evacuate or remove the products from the discharge station. At the interface between the separation station 120 and the discharge station 130, a guiding plate 133 is provided which gradually comes closer to the inner side of the open endless belt 101. Products extending through but still being held by the open endless belt 101, will be gradually pushed upwards out of the opening of the open endless belt 101. The guiding plate 133 may continue to be present under the open endless belt 101 until the chains are gripped by the sprockets. As such the machine elements, like the sprocket wheels 132 are protected from products pointing through the meshes of the open endless belt.

The separating machine 100 shown in figure 3, can be used to separate freshly harvested potatoes from ground, rocks and other kinds of foreign material, as well as long and slender material such as wooden or steel bars, tubes, etc. To have the best result, the centre-to-centre distance WL between two adjacent bars 15 may be 150 to 250mm. The centre-to-centre distance WT between two adjacent ropes 18 may be in the range of 150 to 250mm. The distance D the lower side 16 of the bars 15 extend under the chains 13 and 14, may be in the range of 10 to 20mm.

The machine 100 shown in figure 3, can be used to separate small recycled parts, like small metal parts from large metal plates, metal tubes and metal parts in general too large to be recycled as such, e.g. recycled through a melting furnace.

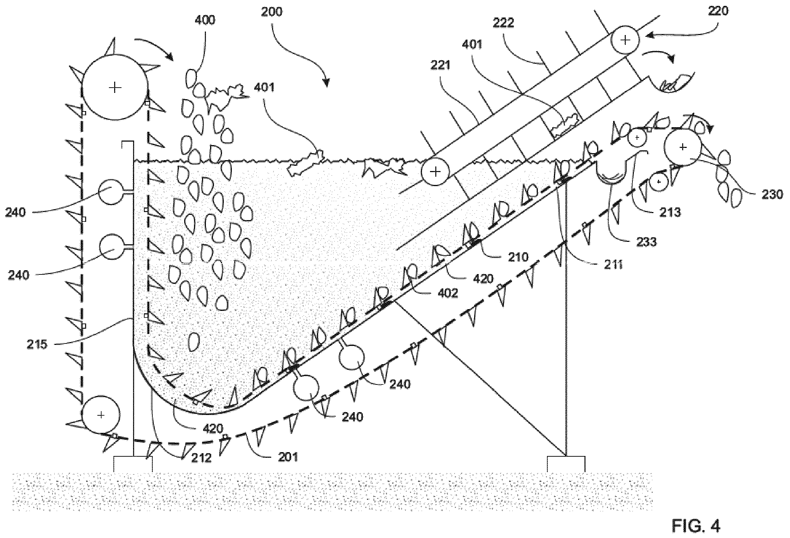

A separating machine 200, for separating products by the difference in specific weight of the products is shown in figure 4. The machine 200 comprises an open endless belt 201 according to the first aspect of the invention. The machine 200 comprises a liquid container 210 for receiving and separating products 400 on difference of specific weight. The container has a funnel shape and has a first flat surface 211 extending between the bottom 212 and a first rim 213 of the container 210. The inner side of the open endless belt 201 contacts this first flat surface 211 along its length while moving from the bottom 212 to said first rim 213. The container has also a second flat surface 215 which is steeper as compared to the first flat surface 211. In this embodiment, the second flat surface 215 is substantially vertically oriented.

The container is filled with a separation liquid, which may be water. Products 400 are provided, e.g. poured, into the liquid-filled container 210. Objects forming part of products to be separated will either sink to the bottom of the container or float on the liquid surface.

The separating machine comprises a first extraction unit 220 to remove all floating objects 401 from the liquid surface. The first extraction unit may comprise a first endless belt 221 provided with paddles 222, scooping up the floating objects. This first endless belt may be an open endless belt or a closed endless belt. The first extraction unit 220 is positioned at one side of the container 210. The extracted objects or products 401, separated from the other sinking products, are further removed by means of e.g. a first transport means, like a transport belt.

The separating machine comprises a second extraction unit 230 to remove all sunken objects from the bottom of the container. The open endless belt 201 is part of this second extraction unit 230. The open endless belt 201 is an open endless belt 15 provided with paddles 23, as shown in figure 2c. This open endless belt 201 scoops up the sunken objects 402 from the bottom 212, and move them to the surface of the liquid. At the turning point 231 of the open endless belt 201, the sunken objects 402 are removed from the open endless belt and further removed by means of e.g. a second transport means, like a transport belt, or are provided into a second container for removal.

This open endless belt 201 contacts the first flat surface with the lower sides of the bars of the open endless belt. Because the bars of the open endless belt 201 are flush with or extend beyond the first and second lateral chain at the inner side of the open endless belt, the bars contacting the flat surface will scrape to the flat surface while moving from bottom 212 to the first rim 213. Possible dirt and sediment 420, which settles in the liquid, is scraped from the surface 211 and dragged along with the bars of the open endless belt 201. As such this flat surface is cleaned and sediment and dirt is moved upwards out of the liquid by this open endless belt 201. The dragged dirt and sediment is provided in a gutter 233. The sunken objects 402 are at that moment still on the outer surface of the open endless belt, and can be provided to a transport means.

The product to be separated by the machine 200 may be foreign material from root-crops, optionally freshly harvested or alternatively already washed root-crops. The foreign material may be plastics, leaves, etc. Ground or dirt present on the skin of the root-crops may be transferred to the liquid, and as such sediment may form at bottom of container. The inner side of the open endless belt 201 scrapes the sediment from the bottom and surfaces of the container, temporarily locate the sediment in the openings of the endless open belt, and drag the sediment towards the first rim 213 where it can be extracted using the gutter. The crops will be scooped and taken by the endless open belt upwards beyond the first rim 213. The openings in the endless open belt may be small enough to prevent the root-crops to pass the openings.

The container, preferably along the surface 215 opposite to first flat surface 211 via which the sunken objects are extracted, may comprise air or liquid blowers 240 under the liquid level. This to circulate liquid and to assist floating products to be driven to the liquid surface or even to the side where the first extraction unit is present. Additional blowers 240 may also be present along the first flat surface 211 for the same reason.

The machine 200 shown in figure 4, can be used to separate freshly harvested potatoes from leaves, plastic and alike. To have the best result, the centre-to-centre distance WL between two adjacent bars 15 may be in the range of 150 to 250 mm. The centre-to-centre distance WT between two adjacent ropes 18 may be in the range of 10 to 25 mm. The distance D the lower side 16 of the bars 15 extend under the chains 13 and 14, may be in the range of 10 to 30 mm.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the appended claims. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A separating machine for separating products by dimension of said products, said machine comprising an open endless belt (1, 101), said machine comprising a loading station (110), a separation station (120), and a discharge station (130), in this order along the moving direction of the open endless belt, wherein said loading station comprises a loading surface (111) for receiving the products to be separated, said open endless belt passes over said loading surface and is adapted to receive the products to be separated, the loading surface is a moving closed endless belt (111), the moving closed endless belt moving in the same longitudinal direction as the open endless belt, the moving closed endless belt contacting the inner side of the open endless belt, the open endless belt having a longitudinal (L) and transversal (T) direction and defining an inner and an outer side to the open endless belt, said open endless belt (1, 101) comprising:
• a first and second lateral chain (13, 14) at the transversal outer ends of the open endless belt;
• a plurality of transversal bars (15) having a first and a second outer end (15a, 15b), the first outer end being connected to the first longitudinal chain, the second outer end being connected to the second longitudinal chain;
wherein the lower surfaces (16) of the bars (15) are flush with or extend beyond the first and second lateral chain (13, 14) at the inner side (11) of the open endless belt (1, 101), the bars of the open endless belt contacting said loading surface (111).

2. A separating machine according to claim 1, wherein the lower surfaces of the bars extend beyond the first and second lateral chain at the inner side of the open endless belt.

3. A separating machine according to any one of the preceding claims, wherein said chains comprise chain link plates, each of said transversal bars being connected to one of the chain link plates.

4. A separating machine according to any one of the preceding claims, wherein said bars are rods provided at their lower side with a protrusion, said protrusion extending beyond the first and second lateral chain at the inner side of the open endless belt.

5. A separating machine according to any one of the preceding claims, wherein said bars are rods provided at their upper side with a protrusion, said protrusion extending beyond the first and second lateral chain at the inner side of the open endless belt.

6. A separating machine according to any one of the preceding claims, wherein the open endless belt further comprises at least one elongate flexible element positioned between the longitudinal chains and parallel to the longitudinal direction.

7. A separating machine according to any one of the preceding claims, wherein the open endless belt comprises a plurality of elongate flexible element positioned between the longitudinal chains and parallel to the longitudinal direction, each one of the one elongate flexible elements being mechanically connected to at least one of the bars.

8. A separating machine according to any one of the preceding claims, wherein the distance between adjacent elongate flexible elements, centre to centre, is in the range of 50 to 250 mm.

9. A separating machine according to any one of the preceding claims, wherein the distance between adjacent bars, centre to centre, is in the range of 100 to 300 mm.

10. The use of the separating machine according to any one of the claims 1 to 9 for separating foreign parts from freshly harvested root crops, such as potatoes, carrots, turnips, onions or beets.

## Patentansprüche

1. Trennmaschine zum Trennen von Produkten nach Abmessungen der Produkte, wobei die Maschine ein offenes Endlosband (1, 101) umfasst, wobei die Maschine eine Ladestation (110), eine Trennstation (120) und eine Abgabestation (130) in dieser Reihenfolge entlang der Bewegungsrichtung des offenen Endlosbandes umfasst, wobei die Ladestation eine Ladefläche (111) zum Aufnehmen der zu trennenden Produkte umfasst, das offene Endlosband über die Ladefläche läuft und angepasst ist, um die zu trennenden Produkte aufzunehmen, die Ladefläche ein sich bewegendes geschlossenes Endlosband (111) ist, das sich bewegende geschlossene Endlosband sich in der gleichen Längsrichtung wie das offene Endlosband bewegt, das sich bewegende geschlossene Endlosband die Innenseite des offenen Endlosbandes berührt, das offene Endlosband eine Längs- (L) und Transversal- (T) Richtung aufweist und eine Innen- und eine Außenseite für das offene Endlosband definiert, wobei das offene Endlosband (1, 101) Folgendes umfasst:
• eine erste und zweite Seitenkette (13, 14) an den transversalen äußeren Enden des offenen Endlosbandes;
• eine Vielzahl von transversalen Stäben (15) mit einem ersten und einem zweiten äußeren Ende (15a, 15b), wobei das erste äußere Ende mit der ersten Längskette verbunden ist, wobei das zweite äußere Ende mit der zweiten Längskette verbunden ist;
wobei die unteren Flächen (16) der Stäbe (15) bündig mit der ersten und zweiten Seitenkette (13, 14) an der Innenseite (11) des offenen Endlosbandes (1, 101) sind oder sich darüber hinaus erstrecken, wobei die Stäbe des offenen Endlosbandes die Ladefläche (111) berühren.

2. Trennmaschine nach Anspruch 1, wobei sich die unteren Flächen der Stäbe über die erste und zweite Seitenkette an der Innenseite des offenen Endlosbandes hinaus erstrecken.

3. Trennmaschine nach einem der vorhergehenden Ansprüche, wobei die Ketten Kettengliedplatten umfassen, wobei jeder der transversalen Stäbe mit einer der Kettengliedplatten verbunden ist.

4. Trennmaschine nach einem der vorhergehenden Ansprüche, wobei die Stäbe Stangen sind, die an ihrer Unterseite mit einem Vorsprung bereitgestellt sind, wobei sich der Vorsprung über die erste und zweite Seitenkette an der Innenseite des offenen Endlosbandes hinaus erstreckt.

5. Trennmaschine nach einem der vorhergehenden Ansprüche, wobei die Stäbe Stangen sind, die an ihrer Oberseite mit einem Vorsprung bereitgestellt sind, wobei sich der Vorsprung über die erste und zweite Seitenkette an der Innenseite des offenen Endlosbandes hinaus erstreckt.

6. Trennmaschine nach einem der vorhergehenden Ansprüche, wobei das offene Endlosband ferner mindestens ein längliches flexibles Element umfasst, das zwischen den Längsketten und parallel zur Längsrichtung positioniert ist.

7. Trennmaschine nach einem der vorhergehenden Ansprüche, wobei das offene Endlosband eine Vielzahl von länglichen flexiblen Elementen umfasst, die zwischen den Längsketten und parallel zur Längsrichtung positioniert sind, wobei jedes der einen länglichen flexiblen Elemente mechanisch mit mindestens einem der Stäbe verbunden ist.

8. Trennmaschine nach einem der vorhergehenden Ansprüche, wobei der Abstand zwischen benachbarten länglichen flexiblen Elementen von Mitte zu Mitte im Bereich von 50 bis 250 mm liegt.

9. Trennmaschine nach einem der vorhergehenden Ansprüche, wobei der Abstand zwischen benachbarten Stäben von Mitte zu Mitte im Bereich von 100 bis 300 mm liegt.

10. Verwendung der Trennmaschine nach einem der Ansprüche 1 bis 9 zum Trennen von Fremdteilen aus frisch geernteten Hackfrüchten, wie Kartoffeln, Karotten, Speiserüben, Zwiebeln oder Rüben.

## Revendications

1. Machine de séparation pour séparer des produits selon la dimension desdits produits, ladite machine comprenant une courroie sans fin ouverte (1, 101), ladite machine comprenant une station de chargement (110), une station de séparation (120) et une station de décharge (130), dans cet ordre le long de la direction de déplacement de la courroie sans fin ouverte, dans laquelle ladite station de chargement comprend une surface de chargement (111) pour recevoir les produits à séparer, ladite courroie sans fin ouverte passe sur ladite surface de chargement et est adaptée pour recevoir les produits à séparer, la surface de chargement est une courroie sans fin fermée mobile (111), la courroie sans fin fermée mobile se déplaçant dans la même direction longitudinale que la courroie sans fin ouverte, la courroie sans fin fermée mobile étant en contact avec le côté intérieur de la courroie sans fin ouverte, la courroie sans fin ouverte présentant une direction longitudinale (L) et transversale (T) et définissant un côté intérieur et extérieur de la courroie sans fin ouverte, ladite courroie sans fin ouverte (1, 101) comprenant :
• une première et une seconde chaîne latérale (13, 14) aux extrémités extérieures transversales de la courroie sans fin ouverte ;
• une pluralité de barres transversales (15) comportant une première et une seconde extrémité extérieure (15a, 15b), la première extrémité extérieure étant reliée à la première chaîne longitudinale, la seconde extrémité extérieure étant reliée à la seconde chaîne longitudinale ;
dans laquelle les surfaces inférieures (16) des barres (15) affleurent ou s'étendent au-delà de la première et de la seconde chaîne latérale (13, 14) au niveau du côté intérieur (11) de la courroie sans fin ouverte (1, 101), les barres de la courroie sans fin ouverte étant en contact avec ladite surface de chargement (111).

2. Machine de séparation selon la revendication 1, dans laquelle les surfaces inférieures des barres s'étendent au-delà de la première et de la seconde chaîne latérale sur le côté intérieur de la courroie sans fin ouverte.

3. Machine de séparation selon l'une quelconque des revendications précédentes, dans laquelle lesdites chaînes comprennent des plaques de maillon de chaîne, chacune desdites barres transversales étant reliée à l'une des plaques de maillon de chaîne.

4. Machine de séparation selon l'une quelconque des revendications précédentes, dans laquelle lesdites barres sont des tiges munies sur leur côté inférieur d'une saillie, ladite saillie s'étendant au-delà de la première et de la seconde chaîne latérale du côté intérieur de la courroie sans fin ouverte.

5. Machine de séparation selon l'une quelconque des revendications précédentes, dans laquelle lesdites barres sont des tiges munies sur leur côté supérieur d'une saillie, ladite saillie s'étendant au-delà de la première et de la seconde chaîne latérale sur le côté intérieur de la courroie sans fin ouverte.

6. Machine de séparation selon l'une quelconque des revendications précédentes, dans laquelle la courroie sans fin ouverte comprend en outre au moins un élément flexible allongé positionné entre les chaînes longitudinales et parallèle à la direction longitudinale.

7. Machine de séparation selon l'une quelconque des revendications précédentes, dans laquelle la courroie sans fin ouverte comprend une pluralité d'éléments flexibles allongés positionnés entre les chaînes longitudinales et parallèles à la direction longitudinale, chacun des éléments flexibles allongés étant relié mécaniquement à au moins l'une des barres.

8. Machine de séparation selon l'une quelconque des revendications précédentes, dans laquelle la distance entre des éléments flexibles allongés adjacents, de centre à centre, est comprise dans la plage de 50 à 250 mm.

9. Machine de séparation selon l'une quelconque des revendications précédentes, dans laquelle la distance entre des barres adjacentes, de centre à centre, est comprise dans la plage de 100 à 300 mm.

10. Utilisation de la machine de séparation selon l'une quelconque des revendications 1 à 9 pour séparer des corps étrangers de légumes-racines fraîchement récoltés, tels que des pommes de terre, des carottes, des navets, des oignons ou des betteraves.
